# FASCICULE DE BREVET EUROPEEN

(11) **EP 3 662 522 B1**
(45) Date de publication et mention de la délivrance du brevet: **02.06.2021**
(21) Numéro de dépôt: 18755734.3
(22) Date de dépôt: 02.08.2018
(51) Int. Cl.: H01M 50/20, H01M 50/502, H01M 10/42

(54) **ENSEMBLE MULTI-BATTERIES ET CONTENEUR LE COMPRENANT**
MULTIBATTERIEANORDNUNG UND BEHÄLTER DIESELBE UMFASSEND
MULTI-BATTERY ASSEMBLY AND CONTAINER COMPRISING THE SAME

(30) Priorité: 03.08.2017 FR 1757492
(43) Date de publication de la demande: 10.06.2020
(73) Titulaire: SAFT, 92300 Lavallois-Perret (FR)
(72) Inventeur: BIENSAN, Philippe, 33360 Carignan De Bordeaux (FR); LIGEOIS, Dominique, 33450 Saint Loubes (FR)
(74) Mandataire: Hirsch & Associés
(86) Numéro de dépôt international: PCT/EP2018/071089
(87) Numéro de publication internationale: WO 2019/025577

(56) Documents cités:
- EP-A1- 2 866 295
- JP-A- 2013 030 382
- US-A1- 2017 117 519

## Description

### DOMAINE TECHNIQUE

L'invention concerne un ensemble multi-batteries, ainsi qu'un conteneur comprenant un tel ensemble. Elle trouve une application notamment dans le domaine des ensembles à forte densité d'énergie comprenant plusieurs batteries stationnaires de type Ni-Cd, Ni-MH, plomb-acide ou Li-ion rangées dans un conteneur ou dans une pièce. De tels ensembles peuvent aussi être embarqués dans des gros véhicules tels que des bateaux.

### ETAT DE LA TECHNIQUE

Les ensembles de batteries stationnaires incluent généralement des grands couloirs dont le seul but est de permettre une maintenance opérationnelle, comme le remplacement de cellules ou de modules de l'une des batteries, l'entretien, le complément en eau des batteries Ni-Cd, ou encore leur nettoyage. Les batteries sont ainsi organisées et rangées dans des armoires entre lesquelles sont prévus ces couloirs.

Pour un ensemble donné comprenant au moins deux armoires, avec un couloir de maintenance entre chaque armoire, le ratio de surface utilisée pour ce ou ces couloirs par rapport à la surface cumulée des différentes parties de la pièce ou conteneur qui contient les armoires, donc par rapport à la surface utilisée pour le stockage d'énergie lui-même, est souvent très grand.

La largeur d'un tel couloir est en général spécifiée ou réglementaire. Dans le cas de batteries de type Ni-Cd, les couloirs peuvent présenter une largeur de 1200 mm, voire plus. Par ailleurs, la largeur des armoires peut varier par exemple de 500 à 930 mm. Selon les dimensions exactes et le nombre d'armoires, donc de couloirs, plus de 50%, voire plus de 70%, de la surface totale de la pièce peut être perdu en couloirs dont l'utilité n'est qu'occasionnelle.

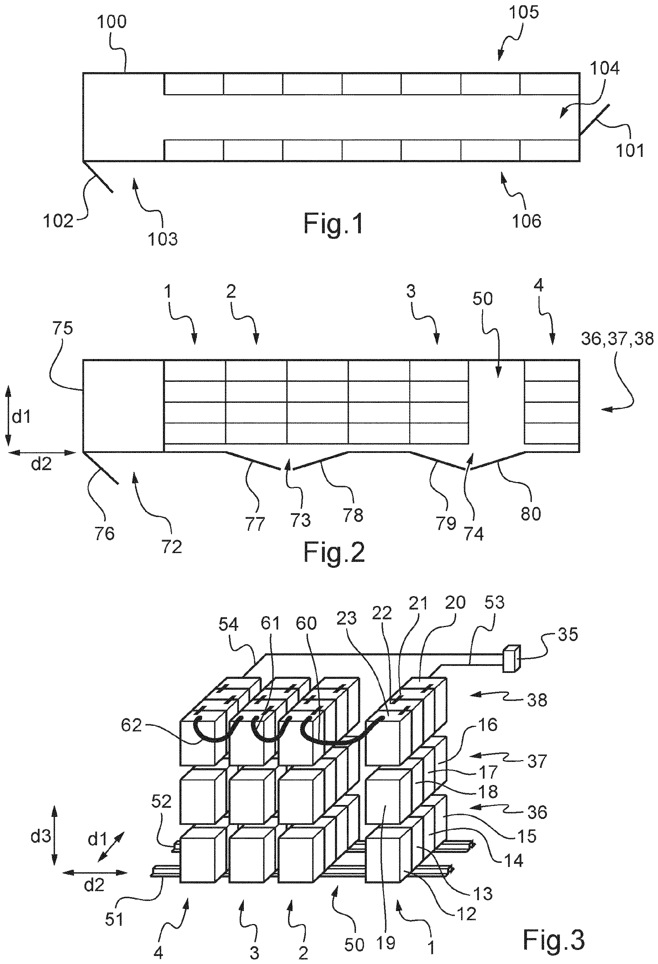

Un exemple d'ensemble multi-batteries de l'état de la technique est représenté en figure 1, en vue de dessus. Dans cet exemple, deux armoires 105, 106 séparées par un couloir de maintenance 104 sont disposées dans une pièce 100 ou un conteneur 100, auquel on accède par une porte de service 102. Une autre porte 101 est prévue, donnant directement accès au couloir 104. Chaque armoire 105, 106 correspond à une rangée de batteries connectées en série et/ou parallèle, chaque rangée comprenant un ou plusieurs niveaux superposés de batteries, ces niveaux étant eux-mêmes connectés en série et/ou parallèle. Dans cet exemple, chaque niveau comprend 7 batteries.

Cet exemple illustre bien le fait que le ratio entre la surface perdue, c'est-à-dire la surface non utilisée pour le recevoir des batteries, et la surface totale, ou le ratio entre cette surface perdue et la surface effectivement utilisée pour recevoir des batteries, ne sont pas optimaux. A l'inverse, si l'on s'intéresse au ratio entre la surface utilisée pour le stockage de l'énergie et la surface totale, on souhaite que ce ratio soit le plus important possible, dans la mesure notamment où ce ratio est directement lié à la notion de densité d'énergie stockée, par rapport au volume occupé par les batteries.

Les documents US 2017/117519 A1, EP 2 866 295 A1 et JP 2013 030382 A divulguent des ensembles multi-batteries comprenant des rangées de batteries alignées et connectées les unes aux autres.

### RESUME DE L'INVENTION

Sauf mention contraire, dans la présente description, on entend par connexion une connexion de type électrique et/ou de communication de données, et on entend par connecté(e)(s) le fait d'être connecté(e)(s) électriquement et/ou pour la communication de données.

Un des buts de l'invention est donc de résoudre notamment les problèmes précités. Ainsi, l'invention a notamment pour objectif de proposer un ensemble multi-batteries présentant une densité d'énergie optimale par rapport au volume utilisé, et respectant les contraintes réglementaires liées à la maintenance d'un tel ensemble.

L'invention a ainsi pour objet, selon un premier aspect, un ensemble multi-batteries comprenant au moins trois rangées de batteries connectées dont deux rangées extrêmes et au moins une rangée intermédiaire, chaque rangée étant connectée à au moins une rangée adjacente, s'étendant dans une première direction, et comprenant au moins un niveau de plusieurs batteries connectées, chacun des niveaux s'étendant dans la première direction.

Au moins une des rangées intermédiaires est une rangée mobile par rapport à une rangée adjacente dans une deuxième direction sensiblement perpendiculaire à la première direction, et est connectée à ladite rangée adjacente par l'une des batteries de l'un de ses niveaux et par l'une des batteries de l'un des niveaux de ladite rangée adjacente au moyen d'un élément de connexion.

L'élément de connexion est configuré pour maintenir la connexion entre la rangée mobile et la rangée adjacente tout en autorisant le déplacement de la rangée mobile par rapport à la rangée adjacente dans la deuxième direction, en sorte de permettre la création d'au moins un couloir temporaire entre la rangée mobile et la rangée adjacente sans déconnexion, c'est-à-dire sans perte de la connexion entre la rangée mobile et la rangée adjacente.

Suivant certains modes de réalisation, l'ensemble multi-batteries comprend en outre une ou plusieurs des caractéristiques suivantes, prise(s) isolément ou suivant toutes les combinaisons techniquement possibles :
- chaque rangée est connectée à au moins une rangée adjacente en série et/ou en parallèle, les niveaux de chaque rangée sont connectés entre eux en série et/ou en parallèle, et les batteries de chaque niveau de chaque rangée sont connectées entre elles en série et/ou en parallèle ;
- la connexion entre les rangées, entre les niveaux de chaque rangée, et entre les batteries de chaque niveau de chaque rangée, est une connexion électrique et/ou de communication de données ;
- chaque élément de connexion d'une rangée mobile avec la rangée adjacente présente une section et une longueur déterminée, en sorte d'autoriser sa courbure selon un rayon de courbure minimum lorsqu'aucun couloir temporaire n'est créé entre la rangée mobile et la rangée adjacente, et d'autoriser la création d'au moins un couloir temporaire de largeur déterminée entre la rangée mobile et la rangée adjacente ;
- au moins un des éléments de connexion d'une rangée mobile avec la rangée adjacente est de type autoportant, en sorte de se maintenir en permanence au-dessus de la rangée mobile et de la rangée adjacente ;
- l'ensemble comprend des moyens de maintien aptes à maintenir au moins un des éléments de connexion d'une rangée mobile avec la rangée adjacente, en permanence au-dessus des desdites rangées mobile et adjacente ;
- les moyens de maintien comprennent un renfort mécanique ;
- le renfort mécanique comprend un ressort coaxial dans lequel l'élément de connexion est inséré ;
- le renfort mécanique comprend une structure articulée dans laquelle est inséré, ou à laquelle est fixé, l'élément de connexion ;
- les moyens de maintien comprennent une structure supérieure et au moins un élément d'accroche destiné à être accroché à ladite structure supérieure ;
- l'élément d'accroche comprend un moyen de rappel, tel qu'un ressort, configuré en sorte que, d'une part lorsqu'aucun couloir temporaire n'est créé entre la rangée mobile et la rangée adjacente connectées par l'élément de connexion et lorsque l'élément d'accroche est accroché à la structure supérieure, le moyen de rappel est dans sa position de repos, et d'autre part lorsqu'un couloir temporaire est créé entre la rangée mobile et la rangée adjacente connectées par l'élément de connexion et lorsque l'élément d'accroche est accroché à la structure supérieure, le moyen de rappel est dans une position d'extension ;
- les moyens de maintien comprennent au moins un rail supérieur orienté dans la deuxième direction, et l'élément d'accroche est accroché audit rail supérieur, en sorte de coulisser le long ce dit rail supérieur;
- l'ensemble comprend au moins deux rails orientés selon la deuxième direction, et en ce que chaque rangée mobile est mobile par rapport à la rangée adjacente dans la deuxième direction par déplacement rectiligne sur lesdits rails ;
- au moins l'une des deux rangées extrêmes est fixe ;
- l'ensemble comprend au moins deux bornes électriques sortant respectivement de l'une des batteries de l'un des niveaux des deux rangées extrêmes ;
- l'ensemble comprend au moins une sortie de communication sortant de l'une des batteries de l'un des niveaux de l'une des rangées ;
- chaque élément de connexion est un élément de connexion de puissance électrique et/ou de communication de données ;
- chaque rangée est formée d'une armoire dans laquelle sont logées les niveaux de batteries de ladite rangée;
- chaque rangée mobile est équipée d'un dispositif de verrouillage permettant d'interdire, lorsqu'il est activé, et d'autoriser, lorsqu'il est désactivé, le déplacement de ladite rangée mobile dans la deuxième direction ;

L'invention a également pour objet, selon un deuxième aspect, un conteneur comprenant un ensemble tel que présenté ci-dessus, et comprenant au moins un accès destiné à permettre à un utilisateur d'accéder à l'ensemble.

Le volume du conteneur est déterminé pour permettre la création du couloir temporaire entre la rangée mobile et la rangée adjacente, et au moins un des accès est configuré pour permettre l'accès audit couloir temporaire.

Suivant certains modes de réalisation, le conteneur comprend en outre une ou plusieurs des caractéristiques suivantes, prise(s) isolément ou suivant toutes les combinaisons techniquement possibles :
- le conteneur comprend une paroi supérieure, et la structure supérieure de l'ensemble comprend ladite paroi supérieure, l'élément d'accroche étant accroché directement à ladite paroi supérieure ;
- le conteneur comprend une paroi supérieure, et la structure supérieure de l'ensemble comprend ladite paroi supérieure, le rail supérieur étant accroché à ladite paroi supérieure.

Ainsi, l'ensemble multi-batteries selon l'invention permet d'augmenter à volume de stockage constant la densité d'énergie stockée dans l'ensemble, tout en garantissant un fonctionnement fiable, simple et pratique, y compris pour des opérations de maintenance, et conforme aux diverses réglementations.

A volume constant, l'ensemble multi-batteries stationnaire selon l'invention permet de délivrer une puissance électrique supérieure à la puissance électrique délivrée par un ensemble de l'état de la technique, et pendant une durée plus importante.

Lors des opérations de maintenance, l'accès à l'une quelconque des batteries de l'ensemble est simplifié, par déplacement de l'une ou l'autre des rangées et création d'au moins un couloir d'accès, sans qu'il soit nécessaire de déconnecter les rangées.

La largeur du ou des couloirs peut être ajustée en fonction des applications, indépendamment du nombre de rangées. Plus le volume de l'ensemble est important, plus le gain en espace de stockage par rapport à un ensemble de l'état de la technique de même volume est important.

La densité d'énergie par rapport au volume de l'ensemble peut être augmentée de 30 à 40 % minimum, voire de plus de 200 % dans quelques configurations spécifiques, par rapport à l'état de la technique.

Ceci est rendu possible par la mobilité des rangées, par exemple sur des rails, et l'utilisation d'éléments de connexion configurés pour ne pas gêner le déplacement.

Cela résout le dilemme entre la possibilité de réaliser des opérations de maintenance ou d'entretien sur un grand ensemble, et le besoin d'augmenter la densité d'énergie dans un tel grand ensemble de stockage de l'énergie. Avec un ensemble selon l'invention, le volume nécessaire dédié à la maintenance se trouve exactement à l'endroit nécessaire, au moment nécessaire.

Par ailleurs, la solution de l'invention permet de garder la zone d'intervention pour maintenance à l'intérieur du conteneur ou de la pièce dans lequel ou laquelle est logé l'ensemble multi-batteries, donc à l'abri des intempéries. L'invention garantit donc la possibilité d'une intervention dite « pieds secs » pour la maintenance, même en cas de pluie, ce qui est bien souvent prescrit par l'utilisateur et/ou la réglementation.

### FIGURES

Les caractéristiques et avantages de l'invention apparaîtront à la lecture de la description qui suit, donnée à titre d'exemple, et non limitative, en référence aux figures suivantes :
- figure 1 : représentation schématique en vue de dessus d'un ensemble multi-batteries dans un conteneur, selon l'état de la technique ;
- figure 2 : représentation schématique en vue de dessus d'un ensemble multi-batteries dans un conteneur selon l'invention ;
- figure 3 : représentation schématique d'un premier mode de réalisation d'un ensemble multi-batteries selon l'invention ;
- figure 4 : représentation schématique d'un deuxième mode de réalisation d'un ensemble selon l'invention ;
- figure 5 : représentation schématique d'un troisième mode de réalisation d'un ensemble selon l'invention ;
- figures 6 et 7 : représentations schématiques respectivement de deux exemples d'éléments de connexion entre deux rangées dans un ensemble selon l'invention ;
- figure 8 : représentation schématique d'un quatrième mode de réalisation d'un ensemble selon l'invention ;
- figure 9 : représentation schématique d'un cinquième mode de réalisation d'un ensemble selon l'invention.

### EXPOSE DE MODES DE REALISATION

La figure 2 illustre schématiquement les principaux avantages de l'invention par rapport à un ensemble multi-batteries de l'état de la technique tel que celui représenté sur la figure 1 est décrit précédemment.

La figure 2 représente un exemple d'ensemble multi-batteries selon l'invention, en vue de dessus, disposé par exemple dans un conteneur ou une pièce. L'ensemble comprend six rangées de batteries connectées en série et/ou parallèle à une ou deux rangées adjacentes. Seules les rangées 1 à 4 sont référencées par souci de simplification de la figure. Mais sauf mention contraire, on désigne l'ensemble des six rangées (ou plus selon le cas) par rangées 1 à 4 (ou rangée 1 à 4).

Chaque rangée 1 à 4 comprend plusieurs niveaux superposés (qui sont donc confondues en vue de dessus dans la figure 2), chaque niveau de chaque rangée 1 à 4 comprenant plusieurs batteries, quatre dans l'exemple de la figure 2, connectées en série et/ou parallèle. Les niveaux d'une rangée 1 à 4 sont également connectés en série et/ou parallèle.

Parmi les rangées 1 à 4 de batteries, les deux rangées 1 et 4 sont des rangées extrêmes, entre lesquelles sont disposées les rangées intermédiaires. Seules les deux rangées intermédiaires 2, 3 sont référencées. Mais sauf mention contraire, on désigne l'ensemble des quatre rangées intermédiaires par rangées intermédiaires 2, 3.

Chaque rangée 1 à 4, s'étend dans une première direction, référencée (d1) dans les figures 2, 3 et 9, et chacun des niveaux de chaque rangée 1 à 4 s'étend dans cette même première direction (d1).

Toutes les rangées 1 à 4, ou au moins toutes les rangées intermédiaires 2, 3 sont des rangées mobiles 1 à 4 par rapport à une rangée adjacente 1 à 4 dans une deuxième direction référencée (d2) dans les figures 2, 3 et 9, sensiblement perpendiculaire à la première direction (d1).

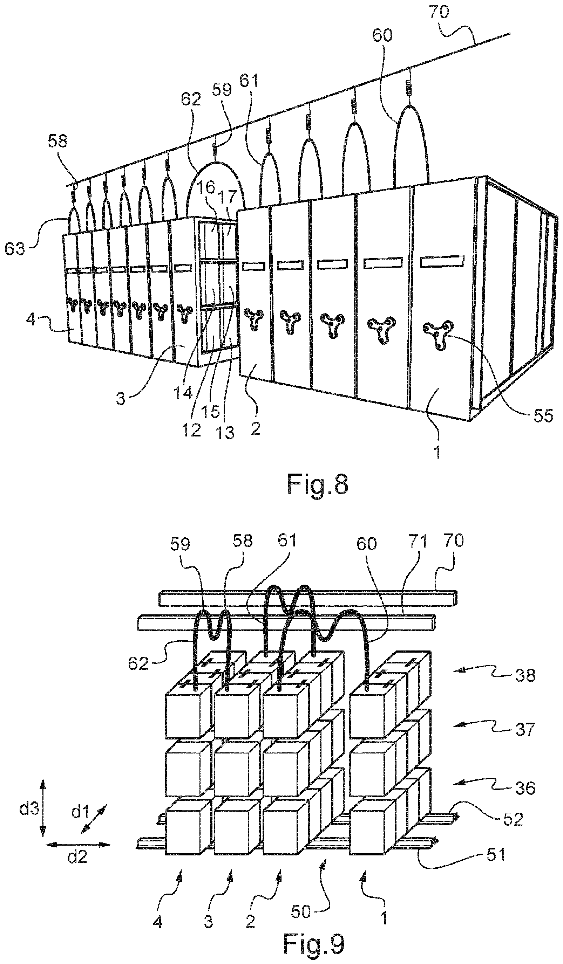

Comme on le voit plus précisément dans les deux modes de réalisation des figures 3 et 9 respectivement, chaque rangée mobile 1 à 4 est connectée en série et/ou parallèle à l'une des rangées adjacentes 1 à 4 par l'une de ses batteries et par l'une des batteries de la rangée adjacente.

Dans ces deux exemples, l'ensemble multi-batteries comprend cette fois quatre rangées 1 à 4 s'étendant dans la première direction (d1), dont les rangées extrêmes 1 et 4 et les rangées intermédiaires 2 et 3. Chaque rangée 1 à 4 comprend trois niveaux 36, 37, 38, superposés dans une troisième direction, non visible dans la figure 2 et référencée (d3) dans les figures 3 et 9, sensiblement perpendiculaire aux premières et deuxième directions (d1) et (d2). Chaque niveau 36, 37, 38 s'étend dans la première direction (d1) et comprend quatre batteries. Ainsi, les batteries superposées de chaque niveau 36, 37, 38 forment quatre colonnes s'étendant dans la troisième direction (d3).

Pour simplifier la figure 3, seules les batteries 12 à 23 de la première rangée 1 ont été référencées, et pour simplifier la figure 9 aucune des batteries n'est référencée.

On voit donc plus précisément sur ces figures 3 et 9, représentant des exemples d'ensemble multi-batteries de l'invention en perspective, la connexion en série et/ou parallèle entre les batteries d'un même niveau, entre les niveaux d'une même rangée, et entre les rangées.

Par exemple :
- les batteries 12 à 15 du niveau 36 de la rangée 1 sont connectées en série et/ou parallèle,
- les batteries 16 à 19 du niveau 37 de la rangée 1 sont connectées en série et/ou parallèle,
- les batteries 20 à 23 du niveau 38 de la rangée 1 sont connectées en série et/ou parallèle,
- les niveaux 36 à 38 de la rangée 1 sont connectés en série et/ou parallèle, par les batteries 1 et 19, et les batteries 16 et 20,
- la rangée 1 est connectée en série et/ou parallèle à la rangée adjacente 2 par la batterie 23 du troisième niveau 38 de la première rangée 1, et par l'une des batteries (non référencée) du troisième niveau de la rangée adjacente 2.

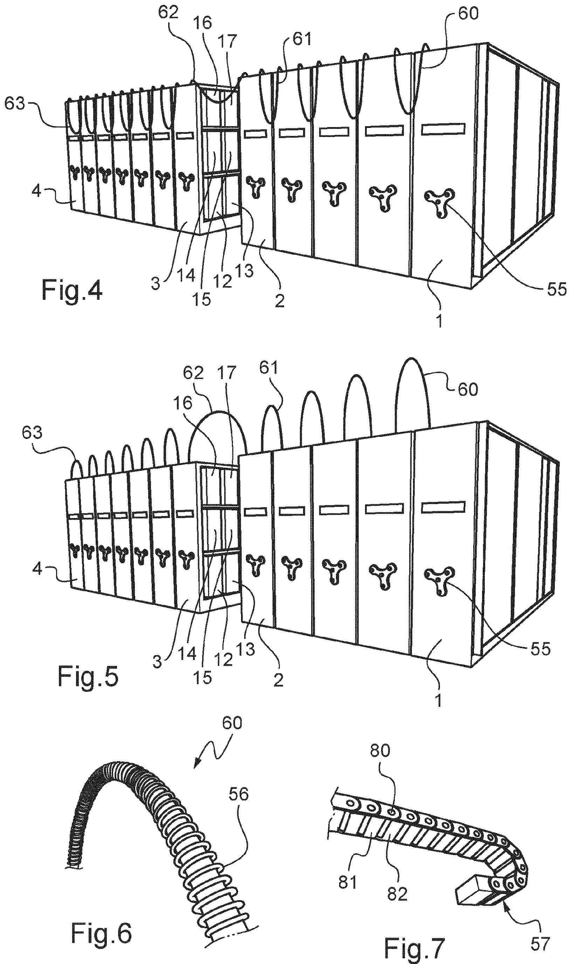

Les connexions entre rangées sont réalisées au moyen d'éléments de connexion 60 à 62 sur les figures 3 et 9, et 60 à 63 sur les figures 4, 5 et 8 qui seront détaillées plus loin.

Chacun de ces éléments de connexion 60 à 63 est configuré pour maintenir la connexion entre une rangée mobile 1 à 4 et la rangée adjacente 1 à 4, tout en autorisant le déplacement de cette rangée mobile 1 à 4 par rapport à la rangée adjacente 1 à 4 dans la deuxième direction (d2), pour permettre la création d'au moins un couloir temporaire 50 entre la rangée mobile 1 à 4 et la rangée adjacente 1 à 4 sans déconnexion.

Dans les exemples des figures 3 et 9, les éléments de connexion 60 à 62 assurent la connexion respectivement entre la rangée 1 et la rangée 2, entre la rangée 2 et la rangée 3, et entre la rangée 3 et la rangée 4.

Ainsi, en déplaçant la rangée 2 par rapport à la rangée 1, on crée le couloir temporaire 50 entre ces deux rangées 1 et 2, sans déconnexion de l'élément de connexion 60, ce qui permet à un opérateur de réaliser des opérations de maintenance sur l'une ou l'autre des batteries de la rangée 2 ou de la rangée 1.

Dans les exemples des figures 4, 5 et 8, l'ensemble multi-batteries comprend douze rangées, seules les rangées 1 à 4 étant référencées, connectées en série et/ou parallèle au moyen d'éléments de connexion dont seuls les éléments 60 à 63 sont référencés. Les éléments de connexion 60 à 63 assurent la connexion respectivement entre la rangée extrême 1 et son unique rangée adjacente, entre la rangée 2 et la rangée 3, et entre la rangée extrême 4 et son unique rangée adjacente. Le déplacement par exemple de la rangée 3 par rapport à la rangée 2 permet de créer le couloir temporaire 50 entre ces deux rangées, laissant la possibilité à un opérateur de réaliser des opérations de maintenance sur l'une ou l'autre des batteries de la rangée 3 ou de la rangée 2 (par exemple les batteries 12 à 17 de la rangée 3).

Ces éléments de connexion 60 à 63 peuvent être tous disposés du même côté de l'ensemble, comme c'est le cas sur les figures 3 à 5 et 8. Dans une variante, par exemple celle de la figure 9, ces éléments de connexion sont disposés de manière alternée d'un côté et de l'autre de l'ensemble.

Les éléments de connexion 60 à 63 de connexion d'une rangée mobile 1 à 4 avec la rangée adjacente 1 à 4, par exemple de type câble de connexion de puissance électrique et/ou de communication de données, présentent une section et une longueur déterminée qui permettent à la fois d'autoriser leur courbure selon un rayon de courbure minimum lorsqu'aucun couloir temporaire 50 n'est créé entre la rangée mobile 1 à 4 et la rangée adjacente 1 à 4 (tel que les éléments de connexion 61 et 62 dans les exemples des figures 3 et 9, ou les éléments de connexion 60, 61 et 63 dans les exemples des figures 4, 5 et 8), et d'autoriser la création d'au moins un couloir temporaire 50 de largeur déterminée entre une rangée mobile 1 à 4 et l'un des rangée adjacentes 1 à 4 (tel que l'élément de connexion 60 dans les exemples des figures 3 et 9, ou l'élément de connexion 62 dans les exemples des figures 4, 5 et 8).

Cette longueur et cette section déterminées des éléments de connexion 60 à 63 dépendent notamment de la largeur souhaitée pour le ou les couloirs 50.

Dans la variante de la figure 5, les éléments de connexion 60 à 63 sont de type autoportant, ce qui permet leur maintien en permanence au-dessus des rangées 1 à 4 respectives qu'ils connectent. Ces éléments de connexion 60 à 63 autoportants sont souples et le caractère autoportant est issu de leurs caractéristiques mécaniques propres ou par l'intermédiaire de moyens de renfort et/ou de maintien.

Deux exemples d'éléments de connexion 60 sont illustrés respectivement sur les figures 6 et 7.

Sur la figure 6, des moyens de maintien 56 permettent de maintenir l'élément de connexion 60 en permanence au-dessus des rangées qu'il connecte. Dans cet exemple, les moyens de maintien 56 consistent en un renfort mécanique 56, de type ressort coaxial 56, dans lequel l'élément de connexion 60 est inséré.

Sur la figure 7, les moyens de maintien 57, qui permettent également de maintenir l'élément de connexion 60 en permanence au-dessus des rangées qu'il connecte, consistent en un renfort mécanique 57, de type structure articulée 57, dans lequel l'élément de connexion 60 est inséré. Alternativement, l'élément de connexion 60 pourrait être fixé à l'extérieur de cette structure articulée 57.

La structure articulée 57 présente par exemple une succession d'éléments 81, 82 connectés deux à deux par des charnières 80.

Le renfort mécanique 56, 57 permet notamment d'éviter le travail mécanique de l'élément de connexion 60, tel que le pincement ou la formation de plis, pendant le déplacement des rangées 1 à 4.

Dans les deux exemples des figures 8 et 9, les moyens de maintien comprennent une structure supérieure 70, ou 70, 71 et des éléments d'accroche 58, 59 destinés à être accrochés à cette structure supérieure.

Plus précisément, dans l'exemple de la figure 8, les éléments d'accroche 58, 59 comprennent un moyen de rappel 58, 59, tel qu'un ressort 58, 59.

Ce ressort 58, 59 est configuré de sorte que lorsqu'aucun couloir temporaire 50 n'est créé entre la rangée mobile 1 à 4 et la rangée adjacente 1 à 4 connectées par l'élément de connexion 60 à 63 et lorsque l'élément d'accroche 58, 59 est accroché à la structure supérieure 70, le moyen de rappel 58, 59 est dans sa position de repos.

Ainsi, sur la figure 8, aucun couloir temporaire n'est par exemple créé entre la rangée extrême 4 et son unique rangée adjacente (non référencé) connectées par l'élément de connexion 63, et l'élément d'accroche 58 est accroché à la structure supérieure 70 formée par exemple par un câble 70 ou un rail 70 s'étendant dans la deuxième direction (d2). Le moyen de rappel 58 est alors dans sa position de repos ou éventuellement dans une position de légère extension due au poids de l'élément de connexion 63, et maintient ainsi l'élément de connexion 63 au-dessus de la rangée extrême 4 et de sa rangée adjacente.

Le ressort 58, 59 est par ailleurs configuré de sorte que lorsqu'un couloir temporaire 50 est effectivement créé entre la rangée mobile 1 à 4 et la rangée adjacente 1 à 4 connectées par l'élément de connexion 60 à 63 et lorsque l'élément d'accroche 58, 59 est accroché à la structure supérieure 70, le moyen de rappel 58, 59 est dans une position d'extension.

Ainsi, sur la figure 8, un couloir temporaire (non référencé sur la figure pour ne pas la surcharger) est créé entre les rangées 2 et 3 connectées par l'élément de connexion 62, et l'élément d'accroche 59 est accroché à la structure supérieure 70 formé par exemple par le câble ou rail 70 s'étendant dans la deuxième direction (d2). Le moyen de rappel 59 est alors dans une position d'extension, de sorte que lorsque le couloir 50 est supprimé (par exemple en déplaçant la rangée 2 vers la rangée 3 ou la rangée 3 vers la rangée 2) le moyen de rappel 59 maintient l'élément de connexion 62 au-dessus des rangées 2 et 3 en revenant vers sa position de repos.

Eventuellement, l'élément d'accroche 58, 59 peut coulisser le long du rail supérieur 70, pour faciliter la création et la suppression du couloir temporaire 50, par exemple par l'intermédiaire d'un galet ou d'une pièce coulissante intermédiaire.

Dans l'exemple de la figure 9, les éléments de connexion 60 à 62 sont accrochés chacun en deux points distincts à un rail supérieur 70 ou 71. Ainsi, par exemple l'élément de connexion 62 est accroché par les deux éléments d'accroche 58, 59 au rail supérieur 71.

Dans le cas où l'ensemble multi-batteries selon l'invention est logé dans un conteneur 75 tel qu'illustré sur la figure 2, la structure supérieure 70, 71 peut être accrochée à la paroi supérieure du conteneur, ou constituer cette paroi supérieure.

Pour faciliter la mobilité des rangées 1 à 4, on peut prévoir de monter ces rangées 1 à 4 sur au moins deux rails 51, 52 orientés selon la deuxième direction (d2), tel que représenté sur l'exemple des figures 3 et 9. Ainsi, chaque rangée mobile 1 à 4 est effectivement mobile par rapport à l'une de ses rangées adjacentes 1 à 4 dans la deuxième direction (d2) par déplacement rectiligne sur ces rails 51, 52, par exemple par l'intermédiaire de roues guidées dans ces rails 51, 52.

Alternativement, la mobilité des rangées 1 à 4 peut être obtenue en montant les rangées sur des moyens de déplacement, tels que des roues, non guidées.

Il n'est pas nécessaire que toutes les rangées 1 à 4 soient mobiles, mais qu'au moins les rangées intermédiaires 2, 3 le soient. Les deux rangées extrêmes 1 et 4, ou l'une des deux seulement, peuvent quant à elles, rester fixes.

Comme illustré dans l'exemple de la figure 3, l'ensemble multi-batteries comprend au moins deux sorties de puissance 53, 54 sortant respectivement de l'une des batteries de l'un des niveaux des deux rangées extrêmes 1 et 4, pour alimenter en puissance un boîtier d'alimentation 35 et des sorties de communication.

Tel qu'illustré dans les exemples des figures 4, 5 et 8, les rangées 1 à 4 peuvent être formées par des armoires 1 à 4 dans lesquelles sont logées les niveaux de batteries respectifs de ces rangées.

On peut prévoir que les rangées 1 à 4, telles que les armoires 1 à 4 des figures 4, 5 et 8, soient équipées d'un dispositif de verrouillage 55, comprenant par exemple une poignée 55, permettant d'interdire, lorsqu'il est activé, et d'autoriser, lorsqu'il est désactivé, le déplacement de la rangée 1 à 4 concernée dans le deuxième direction (d2), donc la création d'un couloir entre cette rangée 1 à 4 et l'une de ses rangées adjacentes.

Ainsi, en dehors des périodes de maintenance lors desquelles les armoires ou rangées 1 à 4 sont déplacées pour créer le couloir temporaire 50 là ou nécessaire, ces différentes armoires 1 à 4 peuvent être bloquées entre elles ou solidarisées les unes avec les autres pour plus de sécurité.

Une solution consiste à utiliser un dispositif de verrouillage 55 comprenant également des moyens de blocage pour bloquer la poignée 55 permettant de déplacer les armoires 1 à 4, par exemple au moyen d'un code connu uniquement de la personne devant réaliser la maintenance.

Alternativement, on peut utiliser des cavaliers liant les armoires 1 à 4 entre elles deux à deux, des verrous au sol, ou une combinaison de ces moyens donnés uniquement pour exemple.

La figure 2 décrite précédemment montre, en vue de dessus, un ensemble multi-batteries logé selon l'invention logé dans un conteneur 75 sans paroi supérieure ou avec la paroi supérieure non dessinée pour simplifier.

On prévoit au moins un accès 72 à 74 pour permettre à un utilisateur d'accéder à l'ensemble.

Le volume, donc en particulier la surface inférieure du conteneur 75 est déterminé pour permettre la création du couloir temporaire 50 entre les rangées mobiles et l'une de leurs rangées adjacentes.

Au moins un des accès 72 à 74 est configuré pour permettre l'accès au couloir temporaire 50.

Ainsi, dans l'exemple de la figure 2, l'accès 72 permet d'accéder à la rangée 1, l'accès 73 permet d'accéder à un couloir temporaire qui serait créé entre la rangée 2 et l'une de ses deux rangées adjacentes, et l'accès 74 permet d'accéder au couloir 50 créé entre les deux rangées 3 et 4 ou au couloir qui serait créé entre la rangée 3 et son autre rangée adjacente. Des portes 76 à 80 sont prévues au niveau des accès respectifs 72 à 74.

Le tableau 1 ci-dessous illustre le gain en densité d'énergie avec un ensemble multi-batteries selon l'invention par rapport à l'état de la technique, dans le cas d'un couloir temporaire 50 de largeur réglementaire 900 mm, en fonction du nombre de rangées 1 à 4 et de la largeur des rangée 1 à 4.

**Tableau 1**

| Largeur du couloir : 900 mm | | |
|---|---|---|
| Largeur des rangées 1 à 4 (mm) | 500 | 930 |
| Nombre de rangées 1 à 4 | Gain (Wh/L) | Gain (Wh/L) |
| 3 | 38% | 24% |
| 4 | 62% | 39% |
| 5 | 79% | 49% |
| 6 | 92% | 56% |
| 7 | 102% | 61% |
| 8 | 110% | 65% |
| 9 | 117% | 68% |

Selon l'invention, il apparait donc une amélioration de la compacité de 24% à 68% pour des rangées 1 à 4 larges de 930 mm et de 38% à 117% pour des rangées 1 à 4 plus étroites (larges de 500 mm) avec un couloir 50 de maintenance de 900 mm

La largeur de couloir est en fait très souvent supérieure à 1000 mm, voire même fréquemment supérieure ou égale à 1200 mm pour des raisons pratiques de manipulation de modules de batterie profonds, ou afin de pouvoir ouvrir les portes des armoires.

Le calcul du gain en compacité réalisé par exemple avec un couloir réglementaire de 1200 mm et pour les deux mêmes largeurs d'armoire de batteries que précédemment est illustré dans le tableau 2 ci-dessous.

**Tableau 2**

| Largeur du couloir : 1200 mm | | |
|---|---|---|
| Largeur des rangées 1 à 4 (mm) | 500 | 930 |
| Nombre d'armoires | Gain Wh/L | Gain Wh/L |
| 3 | 44% | 30% |
| 4 | 75% | 49% |
| 5 | 97% | 62% |
| 6 | 114% | 71% |
| 7 | 128% | 78% |
| 8 | 138% | 83% |
| 9 | 147% | 88% |

La densité d'énergie peut être plus que doublée (+147%) dans le cas des très grandes configurations d'ensemble multi-batteries.

Au-delà de la compacité du système, l'invention permet de réduire les mètres carrés utilisés pour le stockage des batteries dans les mêmes proportions. Pour une application définie, cela permet donc de réduire le volume à construire, à climatiser et éventuellement à sécuriser. Il ensuit une réduction des coûts et contraintes correspondants.

La présente description est donnée à titre d'exemple et n'est pas limitative de l'invention, notamment en ce qui concerne le nombre de batteries par niveau, le nombre de niveaux de batteries par rangée, le nombre de rangées, le type de batterie, ou le nombre de cellules par batterie.

## Revendications

1. Ensemble multi-batteries comprenant au moins trois rangées (1 à 4) de batteries (12 à 23) connectées dont deux rangées extrêmes (1, 4) et au moins une rangée intermédiaire (2, 3), chaque rangée (1 à 4) étant connectée à au moins une rangée adjacente, s'étendant dans une première direction (d1), et comprenant au moins un niveau (36 à 38) de plusieurs batteries (12 à 23) connectées, chacun des niveaux (36 à 38) s'étendant dans la première direction (d1),
**caractérisé en ce qu'**au moins chaque rangée intermédiaire (1 à 4) est une rangée mobile (1 à 4) par rapport à une rangée adjacente (1 à 4) dans une deuxième direction (d2) sensiblement perpendiculaire à la première direction (d1), et est connectée à ladite rangée adjacente (1 à 4) par l'une des batteries (12 à 23) de l'un de ses niveaux (36 à 38) et par l'une des batteries de l'un des niveaux (36 à 38) de ladite rangée adjacente (1 à 4) au moyen d'un élément de connexion (60 à 63), ledit élément de connexion (60 à 63) étant configuré pour maintenir la connexion entre la rangée mobile (1 à 4) et la rangée adjacente (1 à 4) tout en autorisant le déplacement de la rangée mobile (1 à 4) par rapport à la rangée adjacente (1 à 4) dans la deuxième direction (d2), en sorte de permettre la création d'au moins un couloir temporaire (50) entre la rangée mobile (1 à 4) et la rangée adjacente (1 à 4) sans déconnexion.

2. Ensemble selon la revendication 1, **caractérisé en ce que** chaque rangée (1 à 4) est connectée à au moins une rangée adjacente en série et/ou en parallèle, les niveaux (36 à 38) de chaque rangée (1 à 4) sont connectés entre eux en série et/ou en parallèle, et les batteries de chaque niveau (36 à 38) de chaque rangée (1 à 4) sont connectées entre elles en série et/ou en parallèle.

3. Ensemble selon l'une quelconque des revendications 1 et 2, **caractérisé en ce que** la connexion entre les rangées (1 à 4), entre les niveaux (36 à 38) de chaque rangée (1 à 4), et entre les batteries de chaque niveau (36 à 38) de chaque rangée (1 à 4), est une connexion électrique et/ou de communication de données.

4. Ensemble selon l'une quelconque des revendications 1 à 3, **caractérisé en ce que** chaque élément de connexion (60 à 63) d'une rangée mobile (1 à 4) avec la rangée adjacente (1 à 4) présente une section et une longueur déterminée, en sorte d'autoriser sa courbure selon un rayon de courbure minimum lorsqu'aucun couloir temporaire (50) n'est créé entre la rangée mobile (1 à 4) et la rangée adjacente (1 à 4), et d'autoriser la création d'au moins un couloir temporaire (50) de largeur déterminée entre la rangée mobile (1 à 4) et la rangée adjacente (1 à 4).

5. Ensemble selon l'une quelconque des revendications 1 à 4, **caractérisé en ce qu'**au moins un des éléments de connexion (60 à 63) d'une rangée mobile (1 à 4) avec la rangée adjacente (2 à 4) est de type autoportant, en sorte de se maintenir en permanence au-dessus de la rangée mobile et de la rangée adjacente (1 à 4).

6. Ensemble selon l'une quelconque des revendications 1 à 5, **caractérisé en ce qu'**il comprend des moyens de maintien (56 à 59, 70, 71) aptes à maintenir au moins un des éléments de connexion (60 à 63) d'une rangée mobile (1 à 4) avec la rangée adjacente (1 à 4), en permanence au-dessus des desdites rangées mobile et adjacente (1 à 4).

7. Ensemble selon la revendication 6, **caractérisé en ce que** les moyens de maintien (56 à 59, 70, 71) comprennent un renfort mécanique (56, 57).

8. Ensemble selon la revendication l'une quelconque des revendications 6 et 7, **caractérisé en ce que** les moyens de maintien (56 à 59, 70, 71) comprennent une structure supérieure (70, 71) et au moins un élément d'accroché (58, 59) destiné à être accroché à ladite structure supérieure (70, 71).

9. Ensemble selon l'une quelconque des revendications 1 à 8, **caractérisé en ce qu'**il comprend au moins deux rails (51, 52) orientés selon la deuxième direction (d2), et **en ce que** chaque rangée mobile (1 à 4) est mobile par rapport à la rangée adjacente (1 à 4) dans la deuxième direction (d2) par déplacement rectiligne sur lesdits rails (51, 52).

10. Ensemble selon l'une quelconque des revendications 1 à 9, **caractérisé en ce qu'**au moins l'une des deux rangées extrêmes (1, 4) est fixe.

11. Ensemble selon l'une quelconque des revendications 1 à 10, **caractérisé en ce qu'**il comprend au moins deux bornes électriques (53, 54) sortant respectivement de l'une des batteries de l'un des niveaux des deux rangées extrêmes (1, 4).

12. Ensemble selon l'une quelconque des revendications 1 à 11, **caractérisé en ce qu'**il comprend au moins une sortie de communication sortant de l'une des batteries de l'un des niveaux de l'une des rangées (1 à 4).

13. Ensemble selon l'une quelconque des revendications 1 à 12, **caractérisé en ce que** chaque élément de connexion (60 à 63) est un élément de connexion de puissance électrique et/ou de communication de données.

14. Ensemble selon l'une quelconque des revendications 1 à 13, **caractérisé en ce que** chaque rangée (1 à 4) est formée d'une armoire (1 à 4) dans laquelle sont logés les niveaux (36 à 38) de batteries (12 à 23) de ladite rangée (1 à 4).

15. Ensemble selon l'une quelconque des revendications 1 à 14, **caractérisé en ce que** chaque rangée (1 à 4) est équipée d'un dispositif de verrouillage (55) permettant d'interdire, lorsqu'il est activé, et d'autoriser, lorsqu'il est désactivé, le déplacement de ladite rangée (1 à 4) dans la deuxième direction (d2).

16. Conteneur comprenant un ensemble selon l'une quelconque des revendications précédentes, comprenant au moins un accès (72 à 74) destiné à permettre à un utilisateur d'accéder à l'ensemble, **caractérisé en ce que** son volume est déterminé pour permettre la création du couloir temporaire (50) entre la rangée mobile et la rangée adjacente (1 à 11), et **en ce qu'**au moins un des accès (72 à 74) est configuré pour permettre l'accès audit couloir temporaire (50).

## Patentansprüche

1. Eine Multibatterieanordnung, umfassend mindestens drei Reihen (1 bis 4) von angeschlossenen Batterien (12 bis 23), davon zwei äußere Reihen (1, 4), und mindestens eine Zwischenreihe (2, 3), wobei jede Reihe (1 bis 4) an mindestens eine angrenzende Reihe angeschlossen ist, die sich in eine erste Richtung (d1) erstreckt, und umfassend mindestens eine Ebene (36 bis 38) von mehreren angeschlossenen Batterien (12 bis 23), wobei sich jede der Ebenen (36 bis 38) in die erste Richtung (d1) erstreckt,
**dadurch gekennzeichnet, dass** mindestens eine Zwischenreihe (1 bis 4) eine in Bezug zu einer angrenzenden Reihe (1 bis 4) in eine zweite Richtung (d2) im Wesentlichen senkrecht auf die erste Richtung (d1) bewegliche Reihe (1 bis 4) ist, und an die angrenzende Reihe (1 bis 4) durch die eine der Batterien (12 bis 23) einer ihrer Ebenen (36 bis 38) und durch die eine der Batterien der einen der Ebenen (36 bis 38) der angrenzenden Reihe (1 bis 4) mit Hilfe eines Verbindungselements (60 bis 63) angeschlossen ist, wobei das Verbindungselement (60 bis 63) eingerichtet ist, um die Verbindung zwischen der beweglichen Reihe (1 bis 4) und der angrenzenden Reihe (1 bis 4) aufrecht zu erhalten, wobei die Verlagerung der beweglichen Reihe (1 bis 4) in Bezug zu der angrenzenden Reihe (1 bis 4) in die zweite Richtung (d2) gestattet ist, um die Schaffung mindestens eines vorübergehenden Korridors (50) zwischen der beweglichen Reihe (1 bis 4) und der angrenzenden Reihe (1 bis 4) ohne Trennung zu ermöglichen.

2. Die Anordnung nach Anspruch 1, **dadurch gekennzeichnet, dass** jede Reihe (1 bis 4) an mindestens eine angrenzende Reihe in Serie und/oder parallel angeschlossen ist, wobei die Ebenen (36 bis 38) jeder Reihe (1 bis 4) untereinander in Serie und/oder parallel angeschlossen sind, und dass die Batterien jeder Ebene (36 bis 38) jeder Reihe (1 bis 4) untereinander in Serie und/oder parallel angeschlossen sind.

3. Die Anordnung nach einem der Ansprüche 1 und 2, **dadurch gekennzeichnet, dass** die Verbindung zwischen den Reihen (1 bis 4), zwischen den Ebenen (36 bis 38) jeder Reihe (1 bis 4) und zwischen den Batterien jeder Ebene (36 bis 38) jeder Reihe (1 bis 4) eine elektrische Verbindung und/oder eine Datenübertragungsverbindung ist.

4. Die Anordnung nach einem der Ansprüche 1 bis 3, **dadurch gekennzeichnet, dass** jedes Anschlusselement (60 bis 63) einer beweglichen Reihe (1 bis 4) mit der angrenzenden Reihe (1 bis 4) einen bestimmten Querschnitt und eine bestimmte Länge aufweist, um seine Krümmung gemäß einem Mindestkrümmungsradius zu gestatten, wenn kein vorübergehender Korridor (50) zwischen der beweglichen Reihe (1 bis 4) und der angrenzenden Reihe (1 bis 4) erzeugt wird, und die Erzeugung mindestens eines vorübergehenden Korridors (50) mit bestimmter Breite zwischen der beweglichen Reihe (1 bis 4) und der angrenzenden Reihe (1 bis 4) zu gestatten.

5. Die Anordnung nach einem der Ansprüche 1 bis 4, **dadurch gekennzeichnet, dass** mindestens eines der Anschlusselemente (60 bis 63) einer beweglichen Reihe (1 bis 4) mit der angrenzenden Reihe (2 bis 4) selbsttragenden Typs ist, so dass es sich ständig über der beweglichen Reihe und der angrenzenden Reihe (1 bis 4) hält.

6. Die Anordnung nach einem der Ansprüche 1 bis 5, **dadurch gekennzeichnet, dass** sie Haltemittel (56 bis 59, 70, 71) umfasst, die geeignet sind, mindestens eines der Anschlusselemente (60 bis 63) einer beweglichen Reihe (1 bis 4) mit der angrenzenden Reihe (1 bis 4) ständig über den beweglichen und angrenzenden Reihen (1 bis 4) zu halten.

7. Die Anordnung nach Anspruch 6, **dadurch gekennzeichnet, dass** die Haltemittel (56 bis 59, 70, 71) eine mechanische Verstärkung (56, 57) umfassen.

8. Die Anordnung nach einem der Ansprüche 6 und 7, **dadurch gekennzeichnet, dass** die Haltemittel (56 bis 59, 70, 71) eine obere Struktur (70, 71) und mindestens ein Befestigungselement (58, 59) umfassen, das dazu bestimmt ist, an der oberen Struktur (70, 71) befestigt zu werden.

9. Die Anordnung nach einem der Ansprüche 1 bis 8, **dadurch gekennzeichnet, dass** sie mindestens zwei Schienen (51, 52) umfasst, die entlang der zweiten Richtung (d2) ausgerichtet sind, und dass jede bewegliche Reihe (1 bis 4) in Bezug zu der angrenzenden Reihe (1 bis 4) in die zweite Richtung (d2) durch geradlinige Bewegung auf den Schienen (51, 52) beweglich ist.

10. Die Anordnung nach einem der Ansprüche 1 bis 9, **dadurch gekennzeichnet, dass** mindestens eine der zwei äußersten Reihen (1, 4) feststehend ist.

11. Die Anordnung nach einem der Ansprüche 1 bis 10, **dadurch gekennzeichnet, dass** sie mindestens zwei elektrische Klemmen (53, 54) umfasst, die jeweils aus einer der Batterien einer der Ebenen der zwei äußersten Reihen (1, 4) austreten.

12. Die Anordnung nach einem der Ansprüche 1 bis 11, **dadurch gekennzeichnet, dass** sie mindestens einen Kommunikationsausgang umfasst, der aus einer der Batterien einer der Ebenen der einen der Reihen (1 bis 4) austritt.

13. Die Anordnung nach einem der Ansprüche 1 bis 12, **dadurch gekennzeichnet, dass** jedes Anschlusselement (60 bis 63) ein Anschlusselement einer elektrischen Leistung und/oder einer Datenübertragung ist.

14. Die Anordnung nach einem der Ansprüche 1 bis 13, **dadurch gekennzeichnet, dass** jede Reihe (1 bis 4) von einem Schrank (1 bis 4) gebildet ist, in dem die Ebenen (36 bis 38) von Batterien (12 bis 23) der Reihe (1 bis 4) angeordnet sind.

15. Die Anordnung nach einem der Ansprüche 1 bis 14, **dadurch gekennzeichnet, dass** jede Reihe (1 bis 4) mit einer Verriegelungsvorrichtung (55) ausgestattet ist, die es ermöglicht, die Bewegung der Reihe (1 bis 4) in die zweite Richtung (d2) zu untersagen, wenn sie aktiviert ist, und zu gestatten, wenn sie deaktiviert ist.

16. Ein Behälter, umfassend eine Die Anordnung nach einem der vorhergehenden Ansprüche, umfassend mindestens einen Zugang (72 bis 74), der dazu bestimmt ist, es einem Benutzer zu ermöglichen, auf die Anordnung zuzugreifen, **dadurch gekennzeichnet, dass** sein Volumen derart bestimmt wird, dass die Erzeugung des vorübergehenden Korridors (50) zwischen der beweglichen Reihe und der angrenzenden Reihe (1 bis 11) möglich ist, und dass mindestens einer der Zugänge (72 bis 74) eingerichtet ist, um den Zugang zum vorübergehenden Korridor (50) zu ermöglichen.

## Claims

1. A multi-battery assembly comprising at least three banks (1-4) of connected batteries (12 to 23) comprising two end banks (1, 4) and at least one intermediate bank (2, 3), each bank (1-4) being connected to at least one adjacent bank, extending in a first direction (d1), and comprising at least one level (36 to 38) of several connected batteries (12 to 23), each of said levels (36 to 38) extending in the first direction (d1)
**characterized in that** at least each intermediate bank (1-4) is a movable bank (1-4) which is movable relative to an adjacent bank (1-4) in a second direction (d2) substantially perpendicular to said first direction (d1), and is connected to said adjacent bank (1-4) by one of the batteries (12 to 23) of one of its levels (36-38) and one of the batteries of any one of the levels (36 to 38) of said adjacent bank (1-4) by means of a connecting member (60 to 63), said connecting member (60 to 63) being configured to maintain the connection between the movable bank (1-4) and the adjacent bank (1-4) while allowing movement of the movable bank (1-4) with respect to an adjacent bank (1-4) in said second direction (d2), so as to allow the creation of at least a temporary corridor (50) between the said movable bank (1-4) and the adjacent bank (1-4) without disconnection.

2. The assembly according to Claim 1, **characterized in that** each bank (1-4) is connected to at least an adjacent bank in series and/or in parallel, the levels (36 to 38) of each bank (1-4) being connected together in series and/or in parallel, and the batteries of each level (36 to 38) of each bank (1-4) are connected together in series and/or in parallel.

3. The assembly according to any one of claims 1 and 2, **characterized in that** the connection between the banks (1-4), between the levels (36 to 38) of each bank (1-4), and between the batteries of each level (36 to 38) of each bank (1-4) is an electrical connection and/or a connection for data communications.

4. The assembly according to any one of claims 1 to 3, **characterized in that** each connecting member (60 to 63) of a movable bank (1-4) with the adjacent bank (1-4) has a determined cross section and length, so as to allow it to be bent according to a minimum bend radius when no temporary corridor (50) is created between the movable bank (1-4) and the adjacent bank (1-4), and allow the creation of at least a temporary corridor (50) of defined width between the movable bank (1-4) and the adjacent bank (1-4).

5. The assembly according to one of claims 1-4, **characterized in that** at least one of the connecting members (60 to 63) of a movable bank (1-4) with the adjacent bank (2-4) is self-supporting, so as to remain constantly above the movable bank and the adjacent bank (1-4).

6. The assembly according to one of claims 1 to 5, **characterized in that** it comprises holding means (56-59, 70, 71) adapted to hold at least one of the connecting members (60 to 63) between a movable bank (1-4) and the adjacent bank (1-4) permanently above the said movable and adjacent banks (1-4).

7. The assembly according to claim 6, **characterized in that** the holding means (56-59, 70, 71) include mechanical reinforcing means (56, 57).

8. The assembly of any one of claims 6 or 7, **characterized in that** the holding means (56-59, 70, 71) comprise an upper structure (70, 71) and at least one suspending member (58, 59) to be engaged with said upper structure (70, 71).

9. The assembly according to any one of claims 1 to 8, **characterized in that** it comprises at least two rails (51, 52) oriented in the second direction (d2), and **in that** each movable bank (1-4) is movable relative to the adjacent bank (1-4) in the second direction (d2) by rectilinear movement along said rails (51, 52).

10. The assembly according to any one of claims 1 to 9, **characterized in that** at least one of the two end banks (1, 4) occupies a fixed position.

11. The assembly according to any one of claims 1 to 10, **characterized in that** it comprises at least two electrical terminals (53, 54) respectively leaving one of the batteries of one of the levels of two end banks (1, 4).

12. The assembly according to any one of claims 1 to 11, **characterized in that** it comprises at least one output for communications leaving one of the batteries of one of the levels of one of the banks (1-4).

13. The assembly according to any one of claims 1 to 12, **characterized in that** each connecting member (60 to 63) is a connecting member for electrical power and/or for data communications.

14. The assembly according to any one of claims 1 to 13, **characterized in that** each bank (1-4) is formed by a cabinet (1-4) in which the levels (36 to 38) of the batteries (12-23) of said bank (1-4) are housed.

15. The assembly according to any one of claims 1 to 14, **characterized in that** each bank (1-4) is equipped with a locking device (55) for prohibiting, when it is activated, and authorizing when it is de-activated, movement of said bank (1-4) in the second direction (d2).

16. A container comprising an assembly according to any one of the preceding claims, comprising at least one access (72 to 74) for allowing a user to access the assembly, **characterized in that** a volume of the container is determined to allow creation of a temporary corridor (50) between a movable bank and an adjacent bank (1 to 11), and **in that** at least one of the accesses (72 to 74) is configured to allow access to said temporary corridor (50).
